# EUROPÄISCHE PATENTSCHRIFT

(11) **EP 1 421 415 B1**
(45) Veröffentlichungstag und Bekanntmachung des Hinweises auf die Patenterteilung: **14.03.2012**
(21) Anmeldenummer: 02748729.7
(22) Anmeldetag: 03.06.2002
(51) Int. Cl.: G02B 27/09

(54) **ANORDNUNG UND VORRICHTUNG ZUR OPTISCHEN STRAHLHOMOGENISIERUNG**
ARRANGEMENT AND DEVICE FOR OPTICAL BEAM HOMOGENIZATION
SYSTEME ET DISPOSITIF D'HOMOGENEISATION DE FAISCEAU OPTIQUE

(30) Priorität: 17.08.2001 DE 10139355
(43) Veröffentlichungstag der Anmeldung: 26.05.2004
(73) Patentinhaber: LIMO Patentverwaltung GmbH & Co. KG, 36419 Gerstengrund (DE)
(72) Erfinder: MIKHAILOV, Alexei, 44227 Dortmund (DE)
(74) Vertreter: Basfeld, Rainer
(86) Internationale Anmeldenummer: PCT/EP2002/006042
(87) Internationale Veröffentlichungsnummer: WO 2003/016963

(56) Entgegenhaltungen:
- WO-A-98/10314
- DE-A- 2 406 168
- GB-A- 2 154 756
- US-A- 4 605 282
- US-A- 6 115 181
- US-B1- 6 212 012
- PATENT ABSTRACTS OF JAPAN vol. 2000, no. 07, 29. September 2000 (2000-09-29) -& JP 2000 111714 A (KONICA CORP), 21. April 2000 (2000-04-21)
- PATENT ABSTRACTS OF JAPAN vol. 2000, no. 14, 5. März 2001 (2001-03-05) -& JP 2000 321404 A (KEIWA INC), 24. November 2000 (2000-11-24)

## Beschreibung

Die vorliegende Erfindung betrifft eine Vorrichtung zur optischen Strahlhomogenisierung gemäß dem Oberbegriff des Anspruchs 1. Weiterhin betrifft die vorliegende Erfindung eine Anordnung zur optischen Strahlhomogenisierung gemäß dem Oberbegriff des Anspruchs 5.

Eine Vorrichtung der vorgenannten Art ist aus der JP 2000 111714 A bekannt. Bei der darin beschriebenen Vorrichtung ist auf der Eintrittsseite eines transparenten Substrat ein Zylinderlinsenarray mit abwechselnd konvexen und konkaven Zylinderlinsen vorgesehen. Weiterhin ist auf der Austrittsseite des transparenten Substrat ebenfalls ein Zylinderlinsenarray mit abwechselnd konvexen und konkaven Zylinderlinsen vorgesehen. Dabei sind die Zylinderachsen der Zylinderlinsen auf der Eintrittsseite senkrecht zu den Zylinderachsen der Zylinderlinsen auf der Austrittsseite angeordnet. Die Zylinderlinsen können jeweils einen sinusförmigen Querschnitt aufweisen.

Eine weitere Vorrichtung zur optischen Strahlhomogenisierung und eine Anordnung der eingangs genannten Art sind aus der US 6,212,012 B1 bekannt. Bei der darin beschriebenen Vorrichtung sind in Ausbreitungsrichtung des zu homogenisierenden Strahls nacheinander ein erstes Zylinderlinsenarray mit abwechselnd konvexen und konkaven Zylinderlinsen und ein zweites Zylinderlinsenarray mit abwechselnd konvexen und konkaven Zylinderlinsen vorgesehen. Dabei sind die Zylinderachsen der Zylinderlinsen des ersten Arrays senkrecht zu den Zylinderachsen der Zylinderlinsen des zweiten Arrays angeordnet. Die Zylinderlinsen können jeweils einen teilkreisförmigen oder einen parabolischen Querschnitt aufweisen. Bei der Anordnung ist hinter der Vorrichtung eine Sammellinse angeordnet ist, die den Lichtstrahl derart fokussiert, dass er etwa im Bereich der Brennebene der Sammellinse homogener ist als vor dem Eintritt in die Vorrichtung.

Eine weitere Vorrichtung zur optischen Strahlhomogenisierung und eine weitere Anordnung zur optischen Strahlhomogenisierung sind aus der PCT-Anmeldung WO 98/10317 bekannt. Die darin beschriebene Vorrichtung umfasst sowohl auf ihrer Eintrittsfläche als auch auf ihrer Austrittsfläche eine ganze Reihe von parallel zueinander und nebeneinander angeordneten Zylinderlinsen. Die Zylinderlinsen der Eintrittsfläche und die Zylinderlinsen der Austrittsfläche sind hinsichtlich ihrer Zylinderachse senkrecht zueinander angeordnet. Hinter der Vorrichtung ist eine Sammellinse angeordnet, die das durch die Vorrichtung hindurchtretende Licht auf eine Brennebene fokussieren kann. Mit dieser Anordnung und dieser Vorrichtung kann eine Homogenisierung dadurch erzielt werden, dass auf unterschiedliche Bereiche der Zylinderlinsen auftreffende Teilstrahlen des Lichtstrahls in unterschiedliche Raumwinkelelemente abgelenkt werden. Der Lichtstrahl ist somit nach Hindurchtritt durch die Vorrichtung zur optischen Strahlhomogenisierung leicht divergenter als vor dem Eintritt. In der Sammellinse werden parallel in diese einfallende Teilstrahlen derart abgelenkt, dass sie in der Brennebene in einem Punkt zusammengeführt werden. Es findet somit in der Brennebene eine Überlagerung einzelner Teilstrahlen statt, wobei durch die vorherige Brechung an den Zylinderlinsen eine gleichmäßige Streuung in unterschiedliche Raumwinkelbereiche erzielt wurde. Aus diesem Grund ist der Querschnitt des Lichtstrahls in der Brennebene vergleichsweise homogen. Als nachteilig bei der vorgenannten Vorrichtung sowie der vorgenannten Anordnung erweist sich, dass die Vorrichtung aus nebeneinanderliegenden konvexen Zylinderlinsen zusammengesetzt ist, wobei in dem Verbindungsbereich dieser Zylinderlinsen eine äußerst starke Krümmung der Oberfläche der Eintrittsfläche bzw. der Austrittsfläche vorliegt. Die in diese Verbindungsbereiche einfallenden Teilstrahlen des zu homogenisierenden Lichtstrahls treten durch diese Verbindungsbereiche entweder ungehindert hindurch, so dass sie nicht homogenisiert werden können. Alternativ dazu werden sie unkontrolliert in unterschiedlichste Richtungen abgelenkt, so dass sie aus dem Strahl austreten und damit als Verluste anzusehen sind. Weiterhin besteht die Gefahr, dass in diesen scharfkantigen Verbindungsbereichen ein derartig kleiner Krümmungsradius vorhanden ist, dass es zu unerwünschten hochintensiven Fokusbildungen innerhalb der Vorrichtung oder kurz hinter der Vorrichtung kommt. Dies kann bei entsprechend hohen Laserintensitäten zu Beschädigungen führen. Als weiterhin nachteilig kann sich bei sehr hohen Laserintensitäten auch erweisen, dass es sich um konvexe Zylinderlinsen handelt, die hinter der Vorrichtung zu optischen Strahlhomogenisierung Fokuslinien hoher Intensität bilden, so dass in diesen Fokusbereichen ebenfalls Beschädigungen der Umgebung auftreten können.

Aus dem Stand der Technik sind weiterhin Vorrichtungen der eingangs genannten Art bekannt, die auf der Eintrittsfläche und/oder der Austrittsfläche sphärisch konvexe Linsenelemente aufweisen. Diese sphärisch konvexen Linsenelemente sind ebenfalls dicht aneinander angeordnet. Sie homogenisieren den Lichtstrahl auf die gleiche Weise, wie die vorgenannten Zylinderlinsen und weisen letztlich auch die gleichen Nachteile auf. Insbesondere aufgrund der Tatsache, dass sphärisch konvexe Linsenelemente verwendet werden, ist die Gefahr einer Beschädigung der gesamten Apparatur durch hochintensive Fokusbereiche ausgesprochen groß. Weiterhin sind auch die Übergangsbereiche zwischen den einzelnen sphärischen Linsenabschnitten scharfkantig, so dass hier ebenfalls die vorgenannten Probleme auftreten können.

Das der vorliegenden Erfindung zugrundeliegende Problem ist die Schaffung einer Vorrichtung und einer Anordnung der eingangs genannten Art, die effektiver gestaltet sind.

Dies wird hinsichtlich der Vorrichtung durch die kennzeichnenden Merkmale des Anspruchs 1 und hinsichtlich der Anordnung durch die kennzeichnenden Merkmale des Anspruchs 5 gelöst.

Gemäß Anspruch 1 ist vorgesehen, dass die konvexen Abschnitte und die konkaven Abschnitte in der jeweils zu der Richtung konstanter Krümmung senkrechten Richtung eine elliptische oder eine hyperbolische Form aufweisen.

Durch die Anordnung von konvexen und konkaven Abschnitten nebeneinander kann der Übergang zwischen diesen Abschnitten relativ glatt, d. h., ohne zusätzliche Stufen oder Kanten ausgebildet werden. Insbesondere kann die Krümmung des konvexen Abschnitts in die Krümmung des konkaven Abschnitts übergehen. Insbesondere kann relativ glatt bedeuten, dass der Übergangsbereich zwischen den konvexen Abschnitten und den konkaven Abschnitten im Vergleich zu der räumlichen Ausdehnung der konvexen und konkaven Abschnitte in einer Richtung senkrecht zur Eintrittsfläche und zur Austrittsfläche glatt ist, insbesondere keine Stufe oder Kante aufweist, die hinsichtlich ihrer Ausdehnung mit der Ausdehnung der Abschnitte in einer zu der Eintrittsfläche und der Austrittsfläche senkrechten Richtung vergleichbar ist. Relativ glatt soll in diesem Sinne also nicht bedeuten, dass der Übergangsbereich zwischen den konvexen und den konkaven Abschnitten keinerlei Oberflächenrauhigkeit aufweisen soll. Vielmehr soll der Übergangsbereich zwischen diesen Abschnitten keine Stufen oder Kanten aufweisen, die hinsichtlich ihrer räumlichen Ausdehnung wesentlich kleiner als die räumliche Ausdehnung der konvexen und konkaven Abschnitte in Lichthindurchtrittsrichtung sind.

Durch diese glatte Gestaltung des Übergangs zwischen den konvexen Abschnitten und den konkaven Abschnitten wird gewährleistet, dass durch diesen Übergangsbereich hindurchtretendes Licht nicht unkontrolliert aus der Vorrichtung herausgestreut wird. Auf diese Weise wird die Effektivität insbesondere hinsichtlich der Lichtausbeute erhöht. Weiterhin entstehen durch diesen glatten Übergang auch keine scharfen Kurven, die zu intensitätsstarken Fokuspunkten oder Fokuslinien hinter der Vorrichtung führen könnten. Weiterhin können auch durch diesen übergangslosen Verbindungsbereich zwischen den konvexen und konkaven Abschnitten keine auf diesen Bereich auftreffende Lichtstrahlen ungehindert hindurchtreten. Es wird also im Prinzip jeder der auf die Vorrichtung auftreffenden Teilstrahlen so abgelenkt, dass eine optimale Homogenisierung des in die Vorrichtung eintretenden Lichtstrahles gewährleistet werden kann.

Es ist vorgesehen, dass die konvexen Abschnitte und die konkaven Abschnitte eine jeweils in der Eintrittsfläche bzw. der Austrittsfläche liegende Richtung aufweisen, längs der zumindest abschnittsweise die Krümmung der Abschnitte im wesentlichen konstant ist, wobei die Richtung im wesentlichen konstanter Krümmung der Eintrittsfläche zu der Richtung im wesentlichen konstanter Krümmung der Austrittsfläche senkrecht ausgerichtet ist. Es ergibt sich dadurch eine Struktur, die der Struktur der gekreuzten Zylinderlinsen gemäß dem Stand der Technik ähnlich ist. Gemäß der Erfindung ist jedoch vorgesehen, dass immer eine konvexe langgestreckte linsenähnliche Struktur zu einer konkaven linsenähnlichen langgestreckten Struktur benachbart ist. Auf diese Weise kann im Gegensatz zum Stand der Technik der glatte Übergang ohne Stufen oder Kanten zwischen den konvexen und konkaven Abschnitten bzw. linsenähnlichen Strukturen gewährleistet werden.

Die konvexen Abschnitte und die konkaven Abschnitte weisen in der jeweils zu der Richtung konstanter Krümmung senkrechten Richtung entweder eine elliptische Form oder eine hyperbolische Form auf. Durch derartige Oberflächengestaltungen der konvexen und der konkaven Abschnitte wird vermieden, dass hinter der Vorrichtung zur optischen Strahlhomogenisierung Fokusbereiche mit hoher Intensität entstehen. Im Unterschied zu sphärischen Linsen oder zu Zylinderlinsen weisen beispielsweise elliptische Linsen keinen scharf definierten Fokusbereich auf, weil sie senkrecht zu der Richtung konstanter Krümmung eine sich im wesentlichen ständig ändernde Krümmung aufweisen.

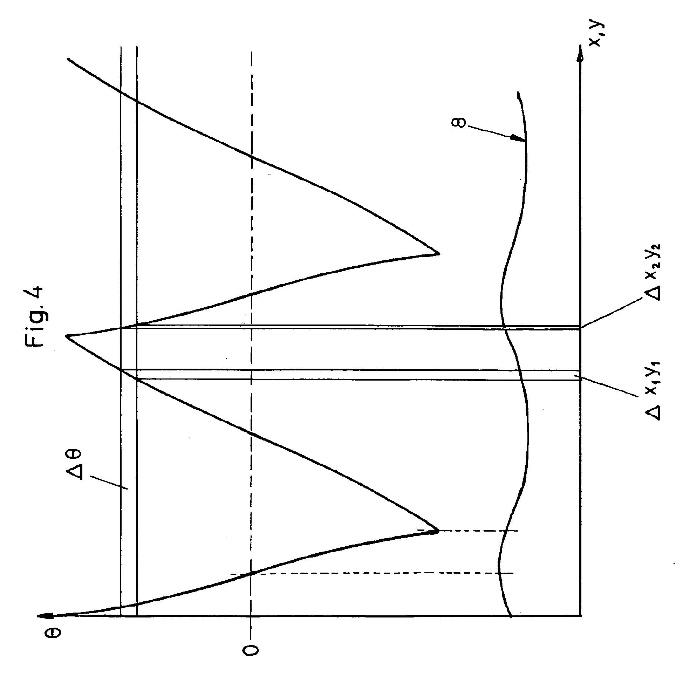

Im Gegensatz zu einer sinusähnlichen Gestaltung weisen die als elliptische oder hyperbolische Formen ausgestalteten konvexen und konkaven Abschnitte zusätzlich den Vorteil auf, dass sie derart gestaltet werden können, dass eine ausgesprochen effektive Homogenisierung des Strahlquerschnitts erfolgen kann. Dies wird in der nachfolgenden Figurenbeschreibung unter Bezugnahme auf Figur 4 noch deutlicher erläutert.

Vorteilhafterweise kann vorgesehen sein, dass die Krümmung der konvexen Abschnitte im Mittel schwächer ausgebildet ist als die Krümmung der konkaven Abschnitte. Auf diese Weise wird die Lichtintensität in den Fokusbereichen hinter den konvexen Abschnitten weiter verringert. Hinter den konkaven Abschnitten entstehen aufgrund der Tatsache, dass sie wie Zerstreuungslinsen wirken, gar keine Fokusbereiche.

Es besteht erfindungsgemäß die Möglichkeit, dass sowohl auf der Eintrittsfläche als auch auf der Austrittsfläche eine große Anzahl von konvexen Abschnitten und konkaven Abschnitten ausgebildet sind, vorzugsweise etwa 100 bis 500, insbesondere etwa 300. Je nach Anwendung kann diese Zahl der konvexen und konkaven nebeneinanderliegenden Abschnitte erhöht oder reduziert werden. Dies ist unter anderem von der Güte der Intensitätsverteilung des Querschnitts des einfallenden Lichtstrahls abhängig.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1a: eine schematische Seitenansicht einer erfindungsgemäßen Anordnung zur Strahlhomogenisierung;
- Fig. 1b: eine gegenüber Fig. 1a um 90° gedrehte Seitenansicht;
- Fig. 1c: Diagramme, die die Intensitätsverteilungen des Strahls an einzelnen Stellen des in Fig. 1a und Fig. 1b abgebildeten Strahlengangs zeigen;
- Fig. 2a: eine Draufsicht auf einen Abschnitt einer erfindungsgemäßen Vorrichtung zur Strahlhomogenisierung;
- Fig. 2b: eine Ansicht gemäß dem Pfeil IIb in Fig. 2a;
- Fig. 2c: eine Ansicht gemäß dem Pfeil IIc in Fig. 2a;
- Fig. 3: eine detaillierte Seitenansicht, die die Brechung einer ganzen Anzahl von Teilstrahlen an Linsenflächen der Vorrichtung zur Strahlhomogenisierung verdeutlicht;
- Fig. 4: ein Diagramm, das die Ablenkung von einfallendem Licht durch eine erfindungsgemäße Vorrichtung zur Strahlhomogenisierung in unterschiedliche Raumwinkel in Abhängigkeit vom Einfallsort verdeutlicht.

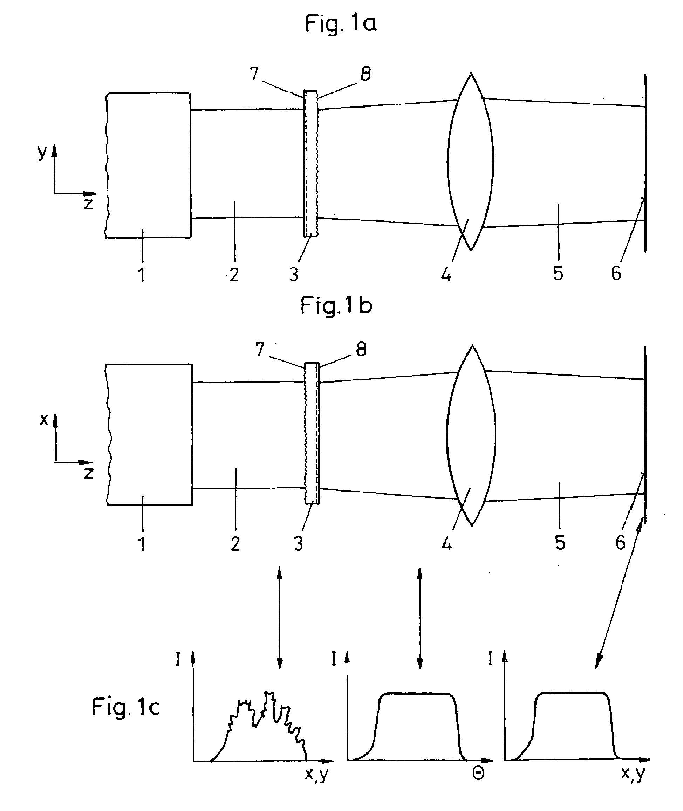

Wie in Fig. 1a und Fig. 1b abgebildete erfindungsgemäße Anordnung umfasst eine Lichtquelle 1 mit einem von dieser Lichtquelle ausgehenden Lichtstrahl 2, der durch eine erfindungsgemäße Vorrichtung 3 zur Strahlhomogenisierung hindurchtritt und daran anschließend von einer Sammellinse 4 fokussiert wird. Der aus der Sammellinse 4 austretende Lichtstrahl 5 ist in Fig. 1a und Fig. 1b in seinem Verlauf bis zur Brennebene 6 der Sammellinse 4 abgebildet.

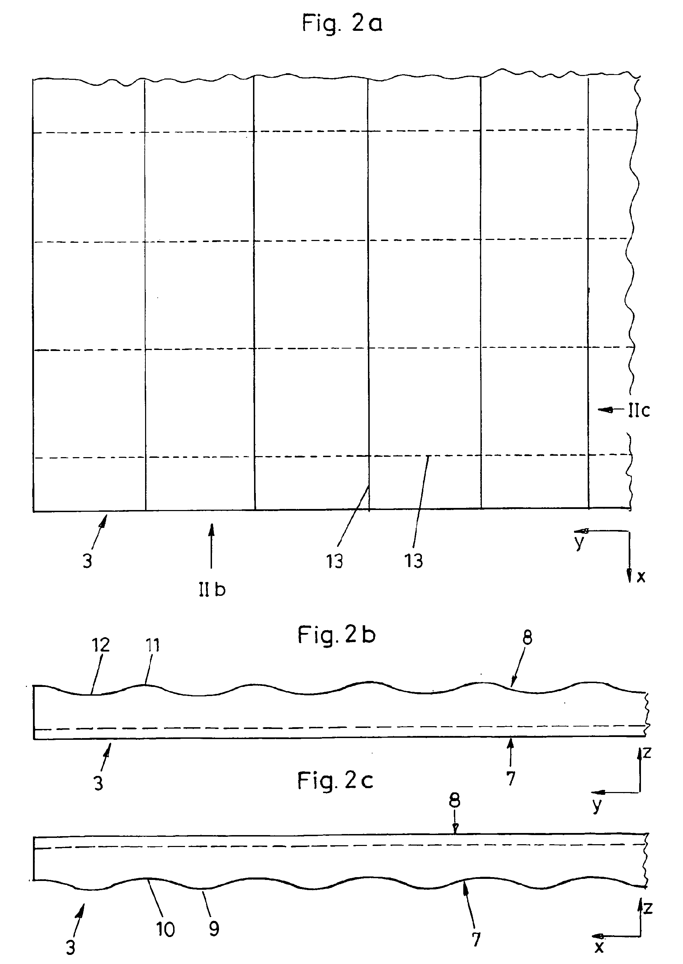

In Fig. 2 ist die erfindungsgemäße Vorrichtung 3 zur Strahlhomogenisierung detailliert abgebildet. Hierbei ist die Struktur der Vorrichtung 3 nicht maßstabsgetreu sondern zur Verdeutlichung übertrieben dargestellt. Dabei weist die Vorrichtung 3 eine im wesentlichen quadratische Eintrittsfläche 7 und eine dieser gegenüberliegende im wesentlichen quadratische Austrittsfläche 8 auf. Sowohl auf der Eintrittsfläche 7 als auch Austrittsfläche 8 sind konvexe Abschnitte 9, 11 und konkave Abschnitte 10, 12 ausgebildet. Beispielsweise aus Fig. 2b sind die konvexen Abschnitte 11 und die konkaven Abschnitte 12 der Austrittsfläche 8 im Schnitt ersichtlich. Sowohl die konvexen Abschnitte 11 als auch die konkaven Abschnitte 12 erstrecken sich in einer Richtung, nämlich in x-Richtung mit unveränderlichem Querschnitt, so dass sich der aus Fig. 2b ersichtliche Querschnitt der Austrittsfläche 8 in x-Richtung, d. h. in die Zeichenebene von Fig. 2b hinein nicht ändert. Das gleiche gilt für die in Fig. 2c abgebildete Eintrittsfläche 7, wobei sich deren Querschnitt in y-Richtung, d. h. in Fig. 2c in die Zeichenebene hinein, nicht ändert. Sowohl die konvexen Flächen 9, 11 als auch die konkaven Flächen 10, 12 weisen im Querschnitt die Form einer Ellipse auf. Aufgrund dieser Ellipsenform ändert sich der Krümmungsradius zwischen den Scheitellinien der konvexen Abschnitte 9, 11 und den Scheitellinien der konkaven Abschnitte 10, 12 im wesentlichen stetig. In Fig. 2a sind zur Verdeutlichung die Scheitellinien 13 der konvexen Abschnitte 9, 11 gestrichelt bzw. durchgezogen eingezeichnet.

Aus Fig. 2b ist ersichtlich, dass die Krümmung der konvexen Abschnitte 11 im Mittel etwas schwächer ist als die Krümmung der konkaven Abschnitte 12. Dies gilt entsprechend für die konvexen Abschnitte 9 und die konkaven Abschnitte 10. Erfindungswesentlich ist in diesem Zusammenhang, dass der Übergang zwischen den konvexen Abschnitten 9, 11 und den konkaven Abschnitten 10, 12 glatt ist, d. h. insbesondere differenzierbar ist. Dies bedeutet, dass eine Funktion Z(y) in Fig. 2b bzw. Z(x) in Fig. 2c in den Übergangsbereichen zwischen den konvexen Abschnitten 9, 11 und den konkaven Abschnitten 10, 12 keine Stufe oder dergleichen aufweisen. Insbesondere gilt beispielsweise Z'(y₁) = Z'(y₂) für infinitesimal benachbarte Punkte y₁, y₂ im Übergangsbereich zwischen den konvexen Abschnitten 9, 11 und den konkaven Abschnitten 10, 12. Hierbei soll Z'(y) die erste Ableitung der Funktion Z(y) sein.

Die in Fig. 2 abgebildete erfindungsgemäße Vorrichtung kann beispielsweise in x- und in y-Richtung Außenabmessungen von 30 mm sowie in z-Richtung Außenabmessungen von 1,5 mm aufweisen. Die konvexen Abschnitte 9, 11 können beispielsweise eine Breite von etwa 30 µm aufweisen. Die konkaven Abschnitte 10, 12 können eine Breite von 70 µm aufweisen. Die Tiefe, d. h. die Erstreckung in z-Richtung, der konvexen Abschnitte 9, 11 von dem Übergangsbereich bis zu dem Scheitelpunkt kann weniger als 1 µm, beispielsweise zwischen 0,2 und 0,3 µm betragen. Die Tiefe der konkaven Abschnitte 10, 12 in z-Richtung kann ebenfalls weniger als 1 µm, beispielsweise 0,8 µm betragen. Es ist natürlich durchaus denkbar, für die erfindungsgemäße Vorrichtung 3 andere Abmessungen zu wählen. Es reicht jedoch vollständig aus, die vorgenannten sehr geringen Tiefen von weniger als 1 µm für die konvexen Abschnitte 9, 11 und die konkaven Abschnitte 10, 12 zu wählen. Weiterhin besteht bei manchen Anwendungen nicht die Notwendigkeit, eine derart kleine Periodenwellenlänge der Aufeinanderfolge von konvexen und konkaven Abschnitten 9, 10, 11, 12 zu wählen. Im vorliegenden Fall ist die Periodenwellenlänge zwischen zwei Scheitellinien 13 der konvexen Abschnitte 9, 11 etwa 100 µm. Es besteht bei entsprechenden Anwendungen durchaus die Möglichkeit Periodenwellenlängen zwischen den Scheitellinien 13 im Millimeterbereich zu wählen.

Bei den oben angegebenen Maßen von etwa 30 mm Breite und etwa 100 µm Periodenlänge besteht somit durchaus die Möglichkeit, etwa 300 oder auch mehr konvexen Abschnitte 9, 11 und konkave Abschnitte 10, 12 nebeneinander anzuordnen.

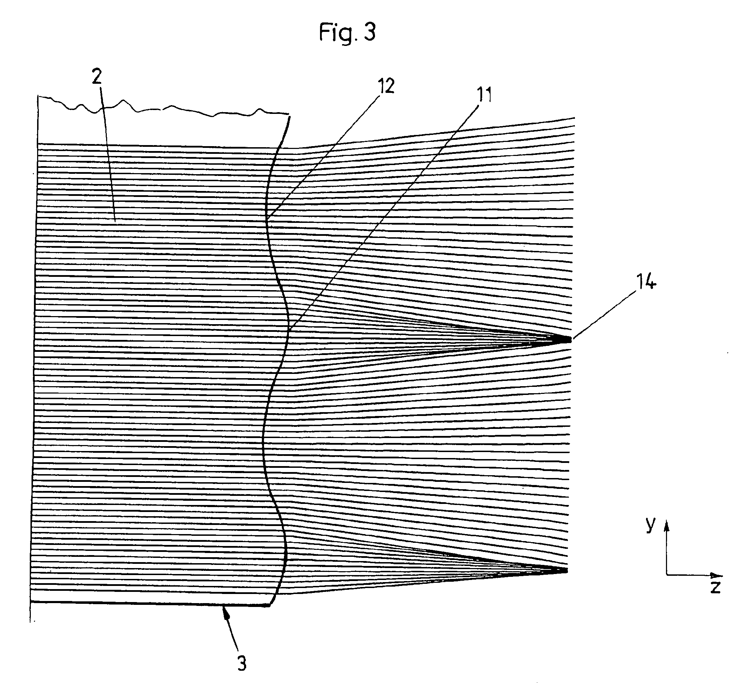

Aus Fig. 3 ist detailliert ersichtlich, wie gleichmäßig auf beispielsweise die Grenzfläche 8 auftreffende Teilstrahlen des Lichtstrahls 2 unterschiedlich abgelenkt werden. Es ist deutlich ersichtlich, dass die Teilstrahlen, die durch die konkaven Abschnitte 12 hindurchtreten voneinander weggestreut werden, so dass in z-Richtung hinter den konkaven Abschnitten 12 keine Fokussierung stattfindet. Die konkaven Abschnitte 12 wirken hierbei wie eine Zerstreuungslinse. Dagegen werden durch die konvexen Abschnitte 11 hindurchtretende Teilstrahlen in einem Fokusbereich 14 aneinander angenähert. Die konvexen Abschnitte 11 wirken hierbei ähnlich wie eine Sammellinse. Dieser Fokusbereich 14 stellt jedoch keinen räumlich sehr stark konzentrierten Fokuspunkt dar. Vielmehr findet bei dem abgebildeten Ausführungsbeispiel eine Verdichtung der auf die konvexen Abschnitte 11 auftreffenden Teilstrahlen um einen Faktor von etwa 6 statt. Beispielsweise kann bei einer Ausdehnung des konvexen Abschnittes 11 in y-Richtung in Fig. 3 von etwa 30 µm der Fokusbereich 14 in x-Richtung eine Ausdehnung von etwa 5 µm aufweisen. Dieser doch vergleichsweise verschmierte Fokusbereich 14 ergibt sich dadurch, dass der konvexe Abschnitt im Gegensatz zu sphärischer Geometrie, wie sie bei regulären Zylinderlinsen vorliegt, keine konstante Krümmung sondern eben eine sich im wesentlichen ständig ändernde Krümmung aufgrund des Ellipsenquerschnitts aufweist.

In Fig. 4 ist der Zusammenhang zwischen den in bestimmten Raumbereichen x, y auftreffenden Teilstrahlen und den Raumwinkeln θ dargestellt. Zur besseren Verdeutlichung ist im unteren Bereich der Fig. 4 ein Teil der Austrittsfläche 8 schematisch angedeutet. Die nachfolgenden Überlegungen gelten analog für die Eintrittsfläche 7. Insbesondere ist hierbei ersichtlich, dass in ein Raumwinkelelement Δθ abgelenkte Teilstrahlen jeweils Beiträge aus benachbarten Raumbereichen Δx₁, y₁ bzw. Δx₂, y₂ enthalten. Diese Raumbereiche Δx₁, y₁ und Δx₂, y₂ sind wie aus Fig. 4 ersichtlich in benachbarten konkaven bzw. konvexen Abschnitten der Austrittsfläche 8 angeordnet. Weiterhin ist aus Fig. 4 ersichtlich, dass die Intervalle Δx₁, y₁ und Δx₂, y₂ die Funktion θ (x,y) bei unterschiedlichen Steigungen treffen, so dass die in das gleiche Raumwinkelelement Δθ abgelenkten Teilstrahlen aus unterschiedlich großen Raumbereichen Δx₁, y₁ und Δx₂, y₂ hervorgehen. Dies hat zur Folge, dass bei einer Mittelung über die gesamte Austrittsfläche 8 in y-Richtung bzw. über die gesamte Eintrittsfläche 7 in x-Richtung eine sehr homogene Verteilung der Lichtintensität in die einzelnen Raumwinkelbereiche Δθ stattfindet.

Dies ist in Fig. 1c verdeutlicht. In dem ersten bzw. linken Diagramm in Fig. 1c ist die Intensitätsverteilung I (x,y) des Lichtstrahls 2 vor dem Eintritt in die erfindungsgemäße Vorrichtung 3 abgebildet. Fig. 1c ist entnehmbar, dass die Intensität sehr inhomogen über die Querschnittsfläche des Lichtstrahls 2 verteilt ist. Eine derartige extrem inhomogene Intensitätsverteilung ist beispielsweise typisch für einen Excimer-Laser. Das Mittlere der drei Diagramme in Fig. 1c verdeutlicht, dass die Intensitätsverteilung I (θ) nach dem Hindurchtritt durch die erfindungsgemäße Vorrichtung 3 sehr homogen ist, d. h. in gleiche Raumwinkelelemente θ wird im wesentliche auch die gleiche Intensität abgestrahlt. Das rechte Diagramm in Fig. 1c verdeutlicht, dass durch die Sammellinse 4 erreicht werden kann, dass in der Brennebene 6 der Sammellinse 4 die Intensitätsverteilung I (x,y) des Lichtstrahls 5 auch hinsichtlich der räumlichen Verteilung homogenisiert werden kann. Dies hat seinen Grund darin, dass parallel auf eine Sammellinse auftreffende Lichtstrahlen in der Brennebene 6 in einem Punkt fokussiert werden, so dass aus einer homogenen Intensitätsverteilung I (θ) hinsichtlich der Raumwinkel eine homogene Intensitätsverteilung I (x,y) hinsichtlich der räumlichen Verteilung wird.

Aufgrund der Tatsache, dass die Eintrittsfläche 7 und die Austrittsfläche 8 in z-Richtung beabstandet voneinander sind, werden die Fokusbereiche 14 der von den konvexen Abschnitten 9 der Eintrittsfläche 7 gebrochenen Teilstrahlen und der von den konvexen Abschnitten 11 der Austrittsfläche 8 gebrochenen Teilstrahlen einander nicht überlagern. Vielmehr werden diese in z-Richtung entsprechend voneinander beabstandet sein. Somit werden sich auch hier keine Bereiche zu hoher Intensität ausbilden. Gleiches wird natürlich auch dadurch erreicht, dass Flächen mit ellipsenähnlichem Querschnitt gewählt werden, wie oben verdeutlicht wurde.

Es besteht erfindungsgemäß durchaus auch die Möglichkeit, die Ellipsengeometrie der Querschnitte der konvexen und konkaven Abschnitte durch andere Formen zu ersetzen. Hier bieten sich hyperbolische Flächen an. Vorteilhaft ist hierbei, dass keine Flächen konstanter Krümmung gewählt werden, weil dadurch unerwünschte Intensitätsmaxima hinter der Vorrichtung zur Strahlhomogenisierung entstehen könnten.

## Patentansprüche

1. Vorrichtung zur optischen Strahlhomogenisierung mit zwei einander im wesentlichen gegenüberliegenden optisch funktionalen Grenzflächen, die als Eintrittsfläche (7) und als Austrittsfläche (8) für Lichtstrahlen (2, 5) dienen können, wobei die Eintrittsfläche (7) und die Austrittsfläche (8) zumindest abschnittsweise linsenähnliche Strukturen aufweisen, wobei die auf der Eintrittsfläche (7) und der Austrittsfläche (8) ausgebildeten Strukturen als abwechselnd nebeneinander angeordnete konvexe Abschnitte (9, 11) und konkave Abschnitte (10, 12) ausgebildet sind, wobei die Übergänge zwischen den konvexen Abschnitten (9, 11) und den konkaven Abschnitten (10, 12) relativ glatt gestaltet sind, wobei die konvexen Abschnitte (9, 11) und die konkaven Abschnitte (10, 12) eine jeweils in der Eintrittsfläche (7) bzw. der Austrittsfläche (8) liegende Richtung (x, y) aufweisen, längs der zumindest abschnittsweise die Krümmung der Abschnitte (9, 10, 11, 12) im wesentlichen konstant ist, wobei die Richtung (y) im wesentlichen konstanter Krümmung der Eintrittsfläche (7) zu der Richtung (x) im wesentlichen konstanter Krümmung der Austrittsfläche (8) senkrecht ausgerichtet ist, **dadurch gekennzeichnet, dass** die konvexen Abschnitte (9, 11) und die konkaven Abschnitte (10, 12) in der jeweils zu der Richtung (y, x) konstanter Krümmung senkrechten Richtung (x, y) eine elliptische oder eine hyperbolische Form aufweisen.

2. Vorrichtung nach Anspruch 1, **dadurch gekennzeichnet, dass** der Übergangsbereich zwischen den konvexen Abschnitten (9, 11) und den konkaven Abschnitten (10, 12) im Vergleich zu der räumlichen Ausdehnung der konvexen und konkaven Abschnitte (9, 11, 10, 12) in einer Richtung (z) senkrecht zur Eintrittsfläche (7) und zur Austrittsfläche (8) glatt ist, insbesondere keine Stufe oder Kante aufweist, die hinsichtlich ihrer Ausdehnung mit der Ausdehnung der Abschnitte (9, 11, 10, 12) in einer zu der Eintrittsfläche (7) und der Austrittsfläche (8) senkrechten Richtung (z) vergleichbar ist.

3. Vorrichtung nach einem der Ansprüche 1 oder 2, **dadurch gekennzeichnet, dass** die Krümmung der konvexen Abschnitte (9, 11) im Mittel schwächer ausgebildet ist als die Krümmung der konkaven Abschnitte (10, 12).

4. Vorrichtung nach einem der Ansprüche 1 bis 3, **dadurch gekennzeichnet, dass** sowohl auf der Eintrittsfläche (7) als auch auf der Austrittsfläche (8) eine große Anzahl von konvexen Abschnitten (9, 11) und konkaven Abschnitten (10, 12) ausgebildet sind, vorzugsweise etwa 100 bis 500, insbesondere etwa 300.

5. Anordnung zur optischen Strahlhomogenisierung mit einer Vorrichtung (3) zur optischen Strahlhomogenisierung, durch die ein zu homogenisierender Lichtstrahl (2, 5) hindurchtreten kann, wobei in Strahlrichtung hinter der Vorrichtung (3) eine Sammellinse (4) angeordnet ist, die den Lichtstrahl (5) derart fokussiert, dass er etwa im Bereich der Brennebene (6) der Sammellinse (4) homogener ist als vor dem Eintritt in die Vorrichtung (3), **gekennzeichnet durch** eine Vorrichtung (3) zur optischen Strahlhomogenisierung nach einem der Ansprüche 1 bis 4.

## Claims

1. Device for optical beam homogenization, having two optically functional boundary surfaces which are essentially opposite one another and can be used as entry surface (7) and exit surface (8) for light beams (2, 5), the entry surface (7) and the exit surface (8) having lens-like structures at least in sections, the structures formed on the entry surface (7) and the exit surface (8) being designed as convex sections (9, 11) and concave sections (10, 12) arranged alternately next to one another, the transitions between the convex sections (9, 11) and the concave sections (10, 12) being fashioned relatively smooth, the convex sections (9, 11) and the concave sections (10, 12) having a direction (x, y) which respectively lies in the entrance surface (7) and the exit surface (8) and along which the curvature of the sections (9, 10, 11, 12) is substantially constant at least in sections, the direction (y) of substantially constant curvature of the entrance surface (7) being aligned perpendicular to the direction (x) of substantially constant curvature of the exit surface (8), **characterized in that** the convex sections (9, 11) and the concave sections (10, 12) have an elliptical or a hyperbolic shape in the direction (x, y) respectively perpendicular to the direction (y, x) of constant curvature.

2. Device according to Claim 1, **characterized in that** in comparison with the spatial extent of the convex and concave sections (9, 11, 10, 12) the transitional region between the convex sections (9, 11) and the concave sections (10, 12) is smooth in a direction (z) perpendicular to the entrance surface (7) and to the exit surface (8), in particular has no step or edge which is comparable with respect to its extent with the extent of the sections (9, 11, 10, 12) in a direction (z) perpendicular to the entrance surface (7) and the exit surface (8).

3. Device according to one of Claims 1 or 2, **characterized in that** the curvature of the convex sections (9, 11) is designed to be weaker on average than the curvature of the concave sections (10, 12).

4. Device according to one of Claims 1 to 3, **characterized in that** a large number of convex sections (9, 11) and concave sections (10, 12), preferably approximately 100 to 500, in particular approximately 300, are formed both on the entrance surface (7) and on the exit surface (8).

5. Arrangement for optical beam homogenization, having a device (3) for optical beam homogenization through which a light beam (2, 5) to be homogenized can pass, there being arranged downstream of the device (3) in the beam direction a collecting lens (4) which focuses the light beam (5) in such a way that it is more homogeneous in the region of the focal plane (6) of the collecting lens (4), for example, than upstream of the entrance into the device (3), **characterized by** a device (3) for optical beam homogenization according to one of Claims 1 to 4.

## Revendications

1. Dispositif d'homogénéisation de faisceau optique avec deux surfaces de séparation optiques fonctionnelles pour l'essentiel opposées mutuellement, pouvant servir de surface d'entrée (7) et de surface de sortie (8) à des faisceau lumineux (2, 5), la surface d'entrée (7) et la surface de sortie (8) comportant au moins par zones, des structures similaires à des lentilles, les structures formées sur la surface d'entrée (7) et la surface de sortie (8) étant réalisées sous la forme d'une alternance de zones convexes (9, 11) et de zones concaves (10, 12) disposées côte à côte, les transitions entre les zones convexes (9, 11) et les zones concaves (10, 12) étant de forme relativement lisse, les zones convexes (9, 11) et les zones concaves (10, 12) présentant une direction (x, y) située dans la surface d'entrée (7) respectivement dans la surface de sortie (8), le long de laquelle la courbure des zones (9, 10, 11, 12) est pour l'essentiel constante au moins par zones, la direction (y) de courbure essentiellement constante de la surface d'entrée (7) étant orientée perpendiculairement à la direction (x) de courbure essentiellement constante de la surface de sortie (8), **caractérisé en ce que** les zones convexes (9, 11) et les zones concaves (10, 12) présentent une forme elliptique ou hyperbolique dans la direction (x, y) respectivement perpendiculaire à la direction (y, x) de courbure constante.

2. Dispositif selon la revendication 1, **caractérisé en ce que** le domaine de transition entre les zones convexes (9, 11) et les zones concaves (10, 12) est lisse en comparaison avec l'extension spatiale des zones convexes et concaves (9, 11, 10, 12) dans une direction (z) perpendiculaire à la surface d'entrée (7) et à la surface de sortie (8), ne présentant notamment pas de marche ou d'arête, qui est comparable du point de vue de son extension avec l'extension des zones (9, 11, 10, 12) dans une direction (z) perpendiculaire à la surface d'entrée (7) et à la surface de sortie (8).

3. Dispositif selon une des revendications 1 ou 2, **caractérisé en ce que** la courbure des zones convexes (9, 11) est développée pour être plus faible en moyenne que la courbure des zones concaves (10, 12).

4. Dispositif selon une des revendications 1 à 3, **caractérisé en ce qu'**un grand nombre de zones convexes (9, 11) et de zones concaves (10, 12), de préférence 100 à 500 notamment 300 environ, est développé sur la surface d'entrée (7) de même aussi que sur la surface de sortie (8).

5. Système d'homogénéisation de faisceau optique avec un dispositif (3) d'homogénéisation de faisceau optique permettant à un faisceau lumineux (2, 5) à homogénéiser de le traverser, une lentille convergente (4) étant disposée derrière le dispositif (3) dans la direction du faisceau pour focaliser le faisceau lumineux (5) de telle sorte qu'il soit plus homogène au voisinage de la région du plan focal (6) de la lentille convergente (4) qu'il ne l'était avant de pénétrer dans le dispositif (3), **caractérisé par** un dispositif (3) d'homogénéisation de faisceau optique selon une des revendications 1 à 4.
